# EUROPEAN PATENT APPLICATION

(11) **EP 4 513 931 A2**
(43) Date of publication of application: **26.02.2025**
(21) Application number: 24195278.7
(22) Date of filing: 20.08.2024
(51) Int. Cl.: H04W 12/48, H04L 9/40, H04L 9/32, H04W 12/00, H04W 12/06, H04W 12/069, H04W 12/108, H04W 12/40, H04W 12/71, H04W 12/72

(54) **TECHNOLOGIES FOR SUBSCRIBER IDENTITY MODULE SECURITY**

(30) Priority: 23.08.2023 US 202363578354 P; 30.01.2024 US 202418427688
(71) Applicant: Apple Inc., Cupertino, CA 95014 (US)
(72) Inventor: LI, Li, Cupertino, 95014 (US); VAIDYANATHAN, Abishek Kumar, Cupertino, 95014 (US); RABOISSON, Aurelien P., Cupertino, 95014 (US); CONWAY, Dennis D., Cupertino, 95014 (US); VERMA, Hunny, Cupertino, 95014 (US); REDDY, Kanuganti Rajeswar, Cupertino, 95014 (US); MARUI, Keizo, Cupertino, 95014 (US); KATTAVOOR SIVAKUMAR, Mohanasundaram, Cupertino, 95014 (US); NG, Ngabin S., Cupertino, 95014 (US); VERMA, Rajeev, Cupertino, 95014 (US); GUPTA, Vidur, Cupertino, 95014 (US)
(74) Representative: Zacco Denmark A/S

(57) **Abstract**

The present application relates to devices and components including apparatus, systems, and methods for pairing UICC/SIM with device components.

## Description

### FIELD

This disclosure relates to the field of wireless communications and, more particularly, to technologies for subscriber identity module security.

### BACKGROUND

A universal integrated circuit card (UICC) refers to the hardware resources used by a subscriber identity module (SIM). The SIM includes logic and data (for example, identity and authentication information) that may be used to allow a user device to access a cellular network. Secured communications between the SIM and other components of the user device is desired.

### BRIEF DESCRIPTION OF THE DRAWINGS

FIG. 1 illustrates a network environment in accordance with some embodiments.
FIG. 2 illustrates components of a user equipment in accordance with some embodiments.
FIG. 3 illustrates an authentication flow in accordance with some embodiments.
FIG. 4 illustrates another authentication flow in accordance with some embodiments.
FIG. 5 illustrates another authentication flow in accordance with some embodiments.
FIG. 6 illustrates another authentication flow in accordance with some embodiments.
FIG. 7 illustrates another authentication flow in accordance with some embodiments.
FIG. 8 illustrates a pairing flow in accordance with some embodiments.
FIG. 9 illustrates another pairing flow in accordance with some embodiments.
FIG. 10 illustrates another authentication flow in accordance with some embodiments.
FIG. 11 illustrates another authentication flow in accordance with some embodiments.
FIG. 12 illustrates a device in accordance with some embodiments.
FIG. 13 illustrates another device in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, and techniques to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A/B" and "A or B" mean (A), (B), or (A and B); the phrase "(A)B" means (B) or (A and B), that is, A is optional; and the phrase "based on A" means "based at least in part on A," for example, it could be "based solely on A" or it could be "based in part on A."

The following is a glossary of terms that may be used in this disclosure.

The term "circuitry" as used herein refers to, is part of, or includes hardware components that are configured to provide the described functionality. The hardware components may include an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), or a digital signal processor (DSP). In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, and network interface cards.

The term "user equipment" or "UE" as used herein refers to a device with radio communication capabilities that may allow a user to access network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, or reconfigurable mobile device. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, or workload units. A "hardware resource" may refer to compute, storage, or network resources provided by physical hardware elements. A "virtualized resource" may refer to compute, storage, or network resources provided by virtualization infrastructure to an application, device, or system. The term "network resource" or "communication resource" may refer to resources that are accessible by computer devices/systems via a communications network. The term "system resources" may refer to any kind of shared entities to provide services and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, or a virtualized network function.

The term "information element" refers to a structural element containing one or more fields. The term "field" refers to individual contents of an information element, or a data element that contains content. An information element may include one or more additional information elements.

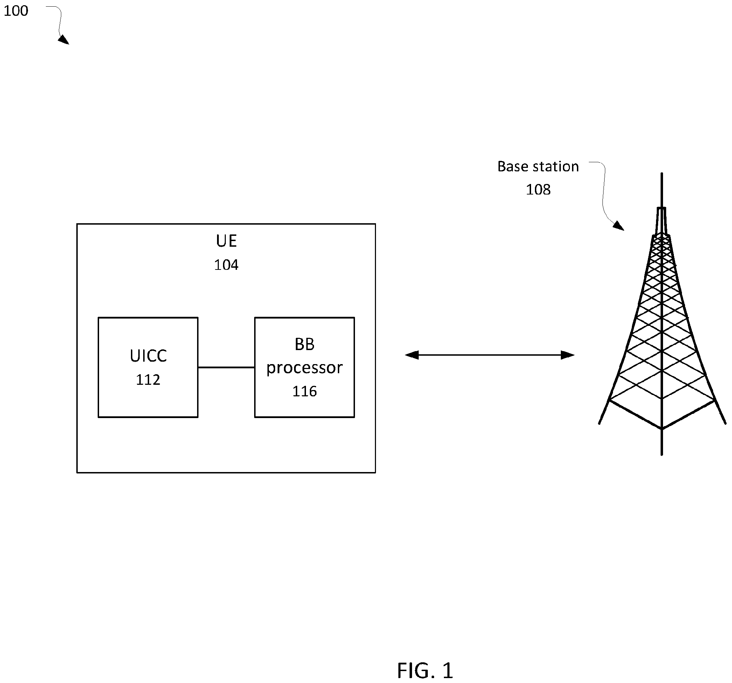

FIG. 1 illustrates a network environment 100 in accordance with some embodiments. The network environment 100 may include a UE 104 communicatively coupled with a base station 108. The UE 104 and the base station 108 may communicate over air interfaces compatible with Third Generation Partnership Project (3GPP) Technical Specifications (TSs) such as those that define LTE, NR, or later system standards. The base station 108 may be an evolved node B (eNB) to provide one or more LTE cells or a next generation node B (gNB) to provide one or more fifth generation (5G) (or later) New Radio (NR) cells.

The UE 104 includes a UICC 112 coupled with a baseband (BB) processor 116. As briefly discussed above, the UICC 112 may have logic and data used to access subscriber services. The UICC 112 may be a removable circuit card or may be embedded into platform circuitry of the UE 104, in which case, the UICC 112 may be referred to as an embedded UICC (eUICC). In some embodiments, the UICC 112 may host a SIM (or eSIM) that performs operations associated with the UICC 112. As used herein, the terms UICC, eUICC, SIM, and eSIM may be used interchangeably with one another.

When the UE 104 initially connects with the base station 108, the UICC 112 and the BB processor 116 may cooperate to provide authentication and identity information to the base station 108. The base station 108 may use the provided information to confirm the UE 104 has access to services provided by a mobile network operator. Embodiments of the present disclosure provide techniques to facilitate establishing a secure channel link between the UICC 112 and the BB processor 116. The secure channel link may prevent another UICC from being placed into the UE 104 and communicating with the BB processor 116, or the base station 108, in place of the UICC 112.

Some embodiments describe establishing the secure communication link by creating a secure association between an identity of the BB processor 116 and an identity of the UICC 112. The identity of the BB processor 116 may be an international mobile equipment identity (IMEI) and the identity of the UICC 112 may be a UICC identifier (ID) (for example, an eUICC identifier (EID)), serial number, etc. The secure association may be established during a manufacturing phase of the UE 104 or by a subsequent configuration. In some embodiments, the secure association may be a one-to-one association in which one identity of the UICC 112 (for example, EID_1) is associated with one identity of the BB processor 116 (IMEI_1). Thus, the UICC 112 may only work with BB processor 116 and vice versa. In other embodiments, plural-to-one associations or one-to-plural associations may be used as long as the associations are securely established as will be described further herein.

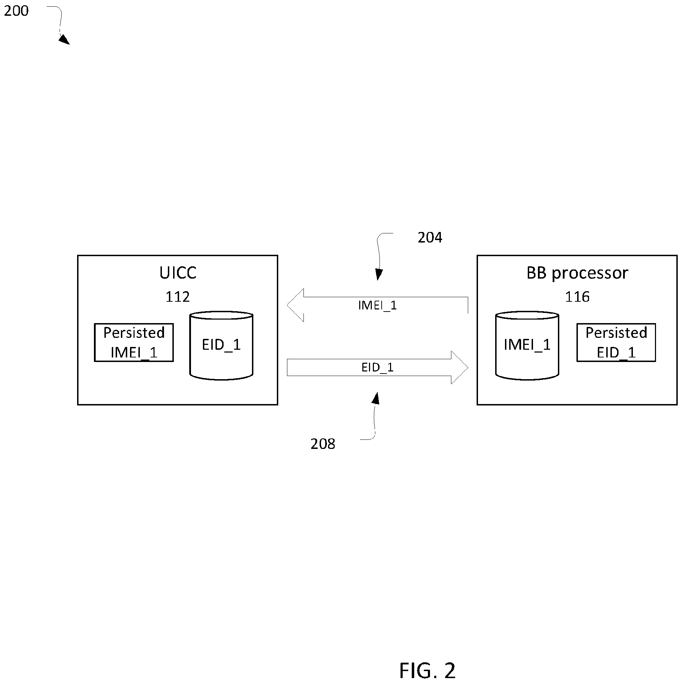

FIG. 2 illustrates components of the UE in further detail in accordance with some embodiments. The UICC 112 may include storage having the UICC's identifier (for example, EID_1) and the BB processor 116 may include storage having the BB processor's identifier (for example, IMEI_1). At 204, the BB processor 116 may transmit the IMEI_1 to the UICC 112. The UICC 112 may store the IMEI_1 in secured location inside the UICC 112 (for example, as persisted IMEI_1) in a manner that prevents tampering or modification of the IMEI_1. At 208, the UICC 112 may transmit the EID_1 to the BB processor 116. The BB processor 116 may store the EID_1 in secured location inside the BB processor 116 (for example, as persisted EID_1) in a manner that prevents tampering or modification of the EID_1. In this manner, IMEI_1 and EID_1 will be bound with each other. Thereafter, as part of any bootup/reset procedure, an authentication handshake process may be used in which the UICC 112 sends the EID_1 to BB processor 116 and the BB processor 116 sends IMEI_1 to the UICC 112. The UICC 112 and the BB processor 116 may then check the identities against their persistent copies.

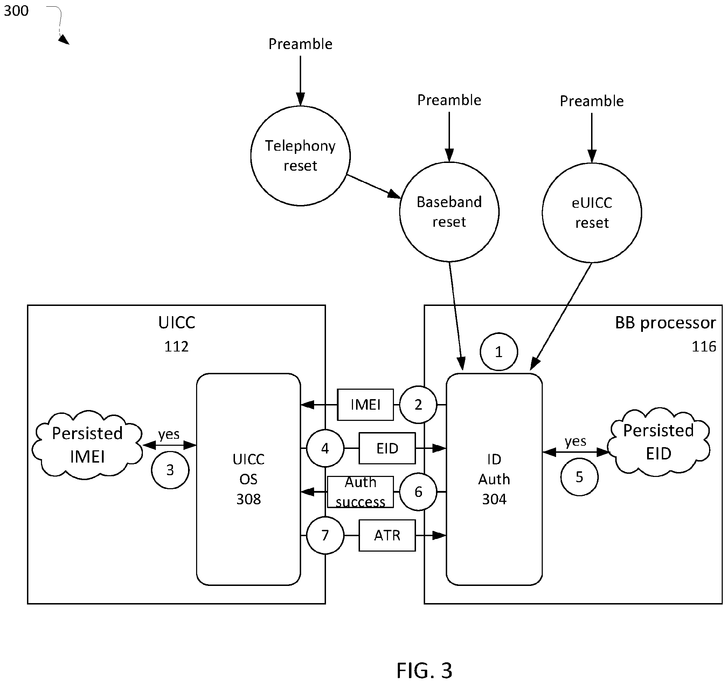

FIG. 3 illustrates an authentication flow 300 using persisted identities in accordance with some embodiments. The authentication flow 300 may initiate based on a telephony reset that triggers a baseband reset and a UICC reset. This may prompt an ID authenticator 304 of the BB processor 116 at operation 1.

At operation 2, the ID authenticator 304 may transmit an IMEI associated with the BB processor 116 to a UICC operating system (OS) 308 of the UICC 112.

At operation 3, the UICC OS 308 may determine whether the IMEI provided by the BB processor 116 at operation 2 matches a persisted IMEI stored in the UICC 112. If the two identities match, the authentication flow 300 may proceed to operation 4 in which the UICC OS 308 provides an EID associated with the UICC 112 to the ID authenticator 304.

At operation 5, the ID authenticator 304 may determine whether the EID provided by the UICC 112 at operation 4 matches a persisted EID stored in the BB processor 116. If the two identities match, the authentication flow 300 may proceed to operation 6 in which the ID authenticator 304 provides an authentication success message to the UICC OS 308.

At operation 7, the UICC OS 308 may transmit an answer-to-reset (ATR) to the ID authenticator 304. After the transmission of the ATR, a secure communication link may be established between the UICC 112 and the BB processor 116. The UICC 112 may then be able to provide all available services to the BB processor 116 as requested.

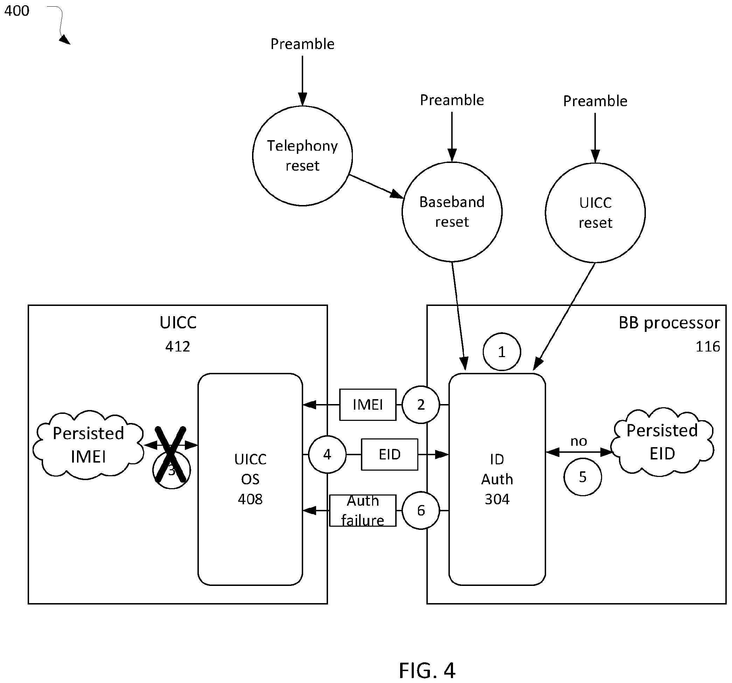

FIG. 4 illustrates an authentication flow 400 using persisted identities in accordance with some embodiments. The authentication flow 400 corresponds to an embodiment in which a new UICC 412 is attempting to communicate with the BB processor 116, after the BB processor 116 previously established a secure communication link with another UICC, for example, UICC 112.

The authentication flow 400 may initiate based on a telephony reset that triggers a baseband reset and a UICC reset. This may prompt the ID authenticator 304 of the BB processor 116 at operation 1.

At operation 2, the ID authenticator 304 may transmit an IMEI associated with the BB processor 116 to a UICC OS 408 of the UICC 412.

In this embodiment, assuming the UICC 412 is attempting to gain access without having previously established a secure communication link with the BB processor 116, the UICC 412 may not have a persisted IMEI that matches the IMEI provided at operation 2. Nevertheless, if the UICC 412 is an impostor device, it may skip operation 3 as described in FIG. 3 and proceed to operation 4, making the implicit, but false, assertion that the IMEI of operation 2 matches its persisted IMEI. At operation 4, the UICC OS 408 may transmit its EID to the BB processor 116.

At operation 5, the ID authenticator 304 may determine that the EID provided by the UICC 412 at operation 4 does not match a persisted EID stored in the BB processor 116. Thus, the authentication flow 400 may advance to operation 6 in which the ID authenticator 304 transmits an authentication failure message to the UICC OS 408. In this instance, communication between the UICC 412 and the BB processor 116 may be restricted. For example, in some embodiments, the UICC 412 may only be able to provide a subset of available operations to the BB processor 116. The subset of available operations may be, for example, operations to perform an initialization procedure with the BB processor 116, operations to enable installation of UICC firmware, or operations to debug or identify the 412 UICC.

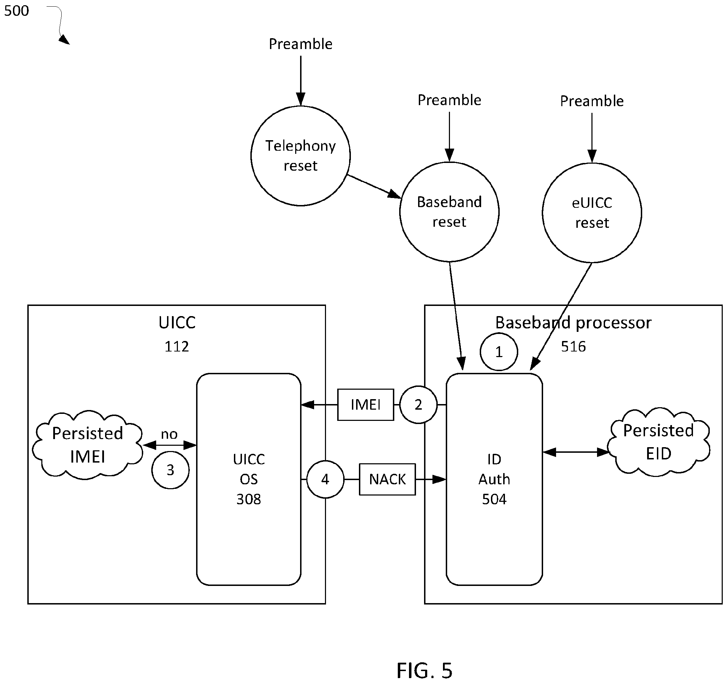

FIG. 5 illustrates an authentication flow 500 using persisted identities in accordance with some embodiments. The authentication flow 500 corresponds to an embodiment in which a new BB processor 516 is attempting to communicate with the UICC 112, after the UICC 112 previously established a secure communication link with another BB processor, for example, BB processor 116.

The authentication flow 500 may initiate based on a telephony reset that triggers a baseband reset and a UICC reset. This may prompt an ID authenticator 504 of the BB processor 516 at operation 1.

At operation 2, the ID authenticator 504 may transmit an IMEI associated with the BB processor 516 to the UICC OS 308 of the UICC 112.

At operation 3, the UICC OS 308 may compare the IMEI provided at operation 2 to the persisted IMEI previously stored in the UICC 112 and determine they do not match. The authentication flow 500 may then advance to operation 4 in which the UICC OS 308 transmits a negative acknowledgement to the baseband processor 516. In this instance, communication between the UICC 112 and the BB processor 516 may be restricted. For example, in some embodiments, the UICC 112 may only be able to provide a subset of available operations to the BB processor 516. The subset of available operations may be, for example, operations to perform an initialization procedure with the BB processor 516, operations to enable installation of UICC firmware, or operations to debug or identify the 112 UICC.

In some embodiments, the secure communication link between the UICC 112 and the BB processor 116 may be established in the field and facilitated by a secure platform of the UE 104. The secure platform, which may also be referred to as a "secure enclave," may be a dedicated secure subsystem integrated into a system on a chip (SoC), but isolated from other processors, e.g., an application processor, to provide an extra layer of security. The secure enclave may operate to keep sensitive user data secure even when if an application processor becomes compromised. The secure enclave may include a secure enclave processor (SEP) that is dedicated to the operations of the secure enclave, a boot read-only memory (ROM) to establish a hardware root of trust, an advanced encryption standard (AES) engine for efficient and secure cryptographic operations, and protected memory/storage.

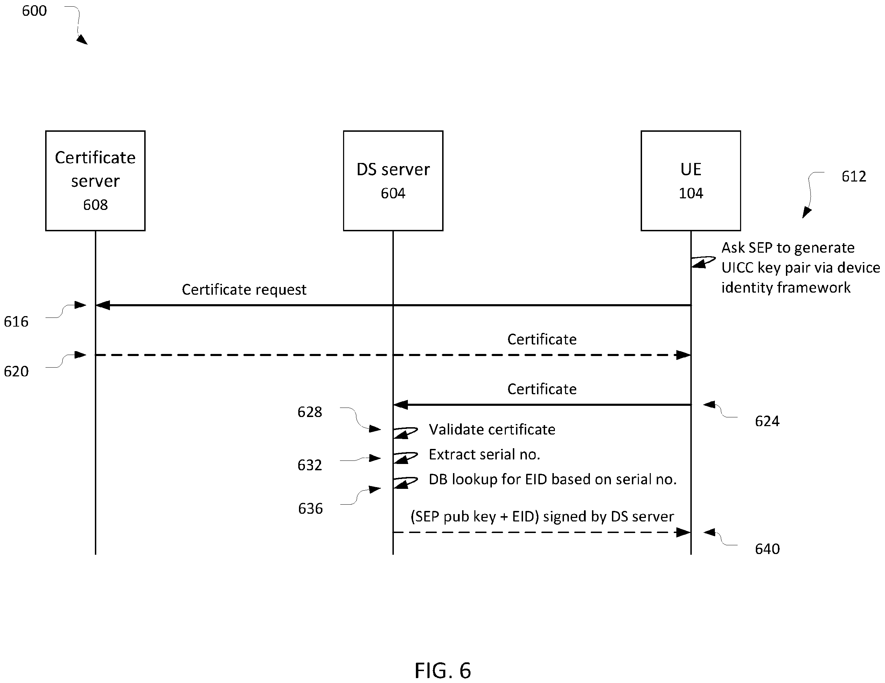

FIG. 6 illustrates an authentication flow 600 in accordance with some embodiments. The authentication flow 600 may involve messages between the UE 104, a device services (DS) server 604, and a certificate server 608. The DS server 604 may be a server that runs on a company's infrastructure and provides document processing tasks (for example, storing, processing, and securing data) for the company. The DS server 604 may provide various tokens and keys.

The authentication flow 600 may include, at 604, the UE 104 asking a SEP, on the device, to generate a UICC key pair via a device identity framework. The device identity framework may be similar to that described elsewhere herein.

The authentication flow 600 may include, at 616, the UE 104 sending a certificate request to a certificate server 608. The certificate request may be generated based on one or more keys of the UICC key pair.

The certificate server 608 may generate a certificate and provide the certificate to the UE 104 at 620. The certificate may attest to the credentials of the UE 104.

At 624, the UE 104 may transmit the certificate to the DS server 604. In some embodiments, the UE 104 may also transmit an ID associated with the UICC 112 of the UE 104.

Upon receiving the certificate, the DS server 604 may use backend information to validate a pairing between the UICC 112 and the BB processor 116. In particular, the DS server 604 may validate the certificate at 628, extract a serial number (corresponding to the BB processor 116) at 632, and perform a database lookup for a UICC ID based on the serial number. The database may have serial numbers (or other BB processor identities) that are securely associated with UICC IDs (for example, EIDs).

At 640, the DS server 604 may sign an attestation, which may include SEP public key and the EID obtained from database and provide the signed attestation to the UE 104. The attestation may be injected to the UICC 112. The UICC 112 may validate the attestation and extract the SEP key for later usage.

In some embodiments, the UICC 112 may be paired with a secure module associated with the BB processor, for example, a baseband SEP. This may reduce attack services, but implementation may be restricted to new product introductions.

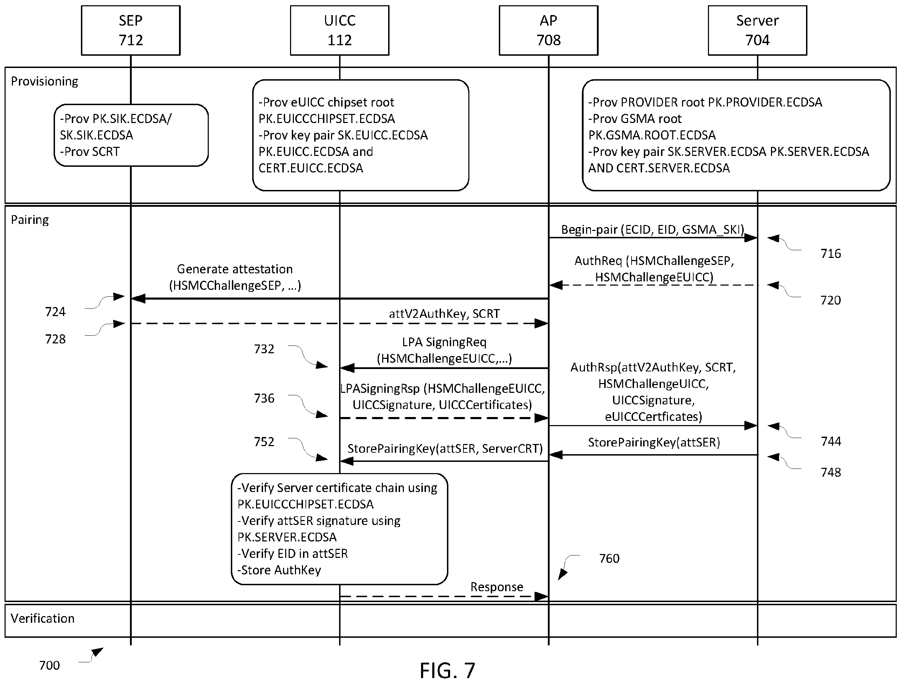

In some embodiments, the UICC 112 may be paired with the baseband 116 by an in-factory pairing process. In some instances, this may use an elliptic curve cryptography digital signature algorithm (ECDSA) signature verification in which the UICC 112 generates a challenge and sends it to the baseband SEP. The baseband SEP may sign it and send the signature back to the UICC 112. The UICC 112 may then verify the signature using a public key of the SEP (AuthKey). The public key of the SEP may be injected during a factory process, or by using some ECKA (elliptic curve key agreement) mechanism instead of ECDSA, to create a shared secret between the SEP and UICC 112 that can be used to establish a secure channel. FIG. 7 illustrates an authentication flow 700 of an in-factory pairing process in accordance with some embodiments.

The authentication flow 700 may involve messages between a server 704, an application processor (AP) 708 of the UE 104, the UICC 112, and a SEP 712. The authentication flow 700 may include a provisioning phase, a pairing phase, and a verification phase.

In the provisioning phase, the SEP 712 may be provisioned with a public key and secret key for ECDSA. The public key may be referred to as PK.SIK.ECDSA and the secret key may be referred to as SK.SIK.ECDSA. The SEP 712 may also be provisioned with a SEP certificate (SCRT). The UICC 112 may be provisioned with a UICC chipset root (PK.EUICCCHIPSET.ECDSA); a key pair (SK.EUICC.ECDSA and PK.EUICC.ECDSA); and a certificate (CERT.EUICC.ECDSA). The server 704 may be provisioned with: a provider root (PK.PROVIDER.ECDSA); a GSMA root (PK.GSMA.ROOT.ECDSA); a key pair (SK.SERVER.ECDSA and PK.SERVER.ECDSA); and a certificate (CERT. SERVER.ECD SA).

Following the provisioning phase, the pairing phase may begin at 716 with a begin-pair message transmitted from the AP 708 to the server 704. The begin-pair message may include an ECID, an EID, or a Global System for Mobile Communications Association (GSMA)_subject key identifier (SKI). The GSMA_SKI may be a list of one or more certificate issuer (CI) public keys of GSMA certificate chains that allow an external entity to know what GSMA root CI is trusted by the eUICC.

At 720, the server 704 may respond with an authentication request message. The authentication request message may include a hardware security module (HSM) challenge for the SEP and the UICC (HSMChallengeSEP, HSMChallengeEUICC).

At 724, the AP 708 may send a generate attestation message to the SEP 712. The generate attestation message may include the HSM challenge for the SEP (HSMChallengeSEP). In response to the HSM challenge, the SEP 712 may respond with a SEP attestation conveying a SEP authentication key (attV2AuthKey) and a SEP certificate (SCRT) that includes a public key. The SEP attestation may be signed by a SEP-specific key pair.

At 732, the AP 708 may send a local profile assistant (LPA) signing request message to the UICC 112. The LPA signing request message may include an HSM challenge for the UICC 112. In some embodiments, the LPA signing request message may also include additional metadata that may be signed by the UICC 112.

At 736, the UICC 112 may respond to the HSM challenge with an LPA signing response. The LPA signing response may include a payload with the HSM challenge for the UICC (HSMChallengeEUICC) signed with a UICC signature (UICCSignature) and a UICC certificate chain (UICCCertificates) generated by the UICC as a challenge to verify the UICC signature.

At 744, the AP 708 may transmit an authentication response message (AuthRsp) to the server 704. The authentication response message may include the SEP attestation conveying the SEP authentication key (attV2AuthKey), the SEP certificate (SCRT), the UICC signed payload (for example, the HSMChallengeUICC, and UICCSignature), and the UICC certificate chain (UICCCertificates).

The server 704 may verify the SCRT certificate, extract the public key, verify the SEP attestation with the public key, and verify the UICC signature based on the UICC certificate chain. Upon verification, the server 704 may respond, at 748, with a store pairing key (StorePairingKey) message. The store pairing key message may include a server attestation (attSER). The server attestation may include a UICC ID associated with the UICC, the public key of the SEP (AuthKey), the UICC challenge from the LPA signing response message, and additional metadata.

At 752, the AP 708 may transmit a store pairing key message to the UICC 112 with the server attestation (attSER) and a server certificate (ServerCRT).

Upon receiving the store pairing message from the AP 708, the UICC 112 may verify a server certificate chain using PK.EUICCCHIPSET.ECDSA, verify attSER signature using PK.SERVER.ECDSA, verify EID in attSER, and store the public key of the SEP (AuthKey).

The UICC may transmit a response to the AP 708 at 760. The response may indicate the UICC 112 has verified the server attestation and stored the public key of the SEP (AuthKey).

In some embodiments, a UICC pairing may need to be repaired or reset. This may be done by injecting a restore root in the UICC 112 during, for example, a manufacturing of the UE 104. A company server may have a dedicated policy defined under a leaf cert for resetting of the pairing. When a reset is needed, the UICC 112 may generate a nonce. The nonce may be generated using the restore root. The nonce may be sent to the company server, which signs the nonce for authorization. The server may then send a special application protocol data unit (APDU) to the UICC 112, through the BB processor 116, to trigger the pairing reset.

In some embodiments, IMEI pairing may be performed by pairing the UICC 112 with the BB processor 116 upon first boot of the UE 104. This may be applied for new or legacy devices in the field.

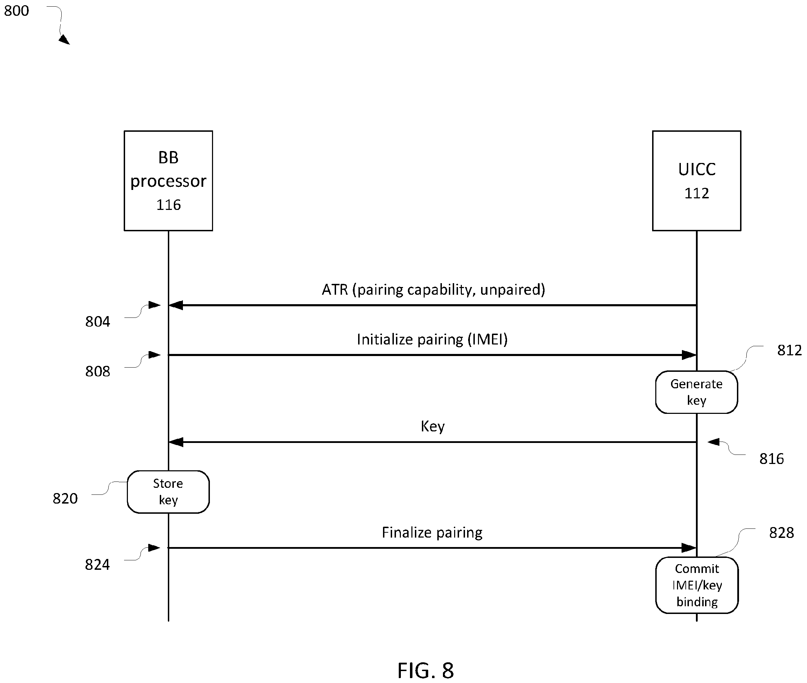

FIG. 8 illustrates a pairing flow 800 in accordance with some embodiments.

At 804, the UICC 112 may send an ATR message to the BB processor 116. Transmission of the ATR message may be triggered by a power-on or reset operation. The ATR may include an indication of a pairing capability of the UICC 112 and may also include an indication that the UICC 112 is unpaired. The unpaired indication may be included in an information element (IE) of the ATR message.

At 808, the BB processor 116 may send an initialize pairing message to the UICC 112. The initialize pairing message may include an IMEI associated with the BB processor 116.

At 812, the UICC 112 may generate a random key. The UICC 112 may transmit the random key to the BB processor 116 at 816. The BB processor 116 may store the random key at 820. The random key may be stored in local memory. In some embodiments, the random key may be additionally/alternatively saved in remote memory (for example, in cloud storage) for recovery.

At 824, the BB processor 116 may transmit a finalize pairing message to the UICC 112. The UICC 112 may, upon receiving the finalize pairing message, commit IMEI/key binding.

The finalize pairing message may be used to confirm the BB processor 116 has successfully saved the key. This may avoid a failure that could otherwise occur if the BB processor 116 experiences an error or reset after the UICC 112 transmits the key at 816, but before the BB processor 116 successfully stores the key.

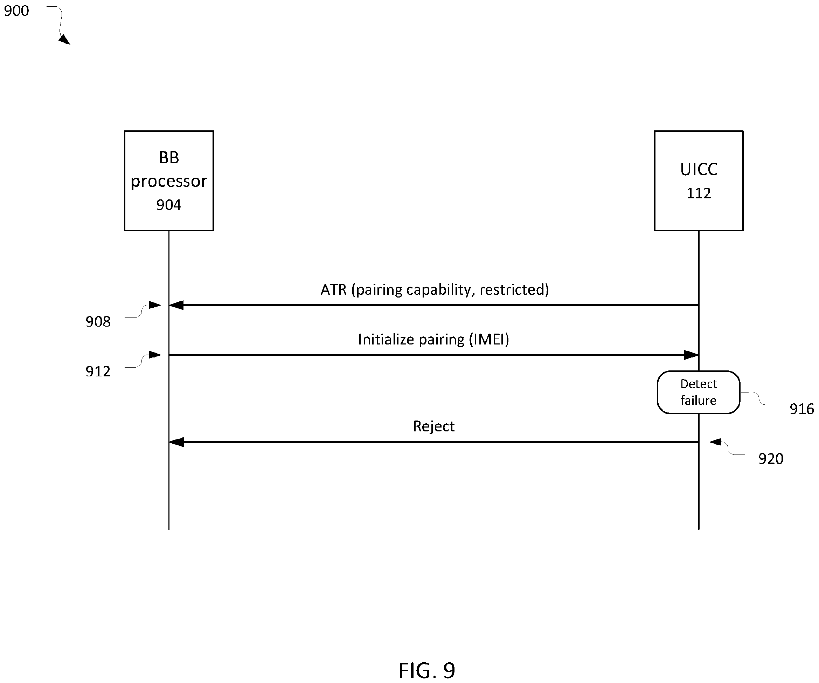

FIG. 9 illustrates a pairing flow 900 in accordance with some embodiments. The pairing flow 900 may occur after the UICC 112 is successfully paired with the BB processor 116 using the pairing flow 800, for example. The pairing flow 900 may represent a pairing attack in which a BB processor 904, which is different from the BB processor 116 that is paired with the UICC 112, is attempting to pair with the UICC 112.

At 908, the UICC 112 may send an ATR message to the BB processor 904. The ATR message may include an indication of a pairing capability of the UICC 112 and an indication that the UICC 112 is operating in a restricted (or paired) state. The restricted indicator may be included in an IE of the ATR.

At 912, the BB processor 904 may send an initialize pairing message to the UICC 112. The initialize pairing message may include an IMEI associated with the BB processor 904.

The UICC 112 may detect a failure at 916 due to the previous pairing of the UICC 112 with the BB processor 116. As a result, the UICC 112 may send a rejected message to the BB processor 904 at 920.

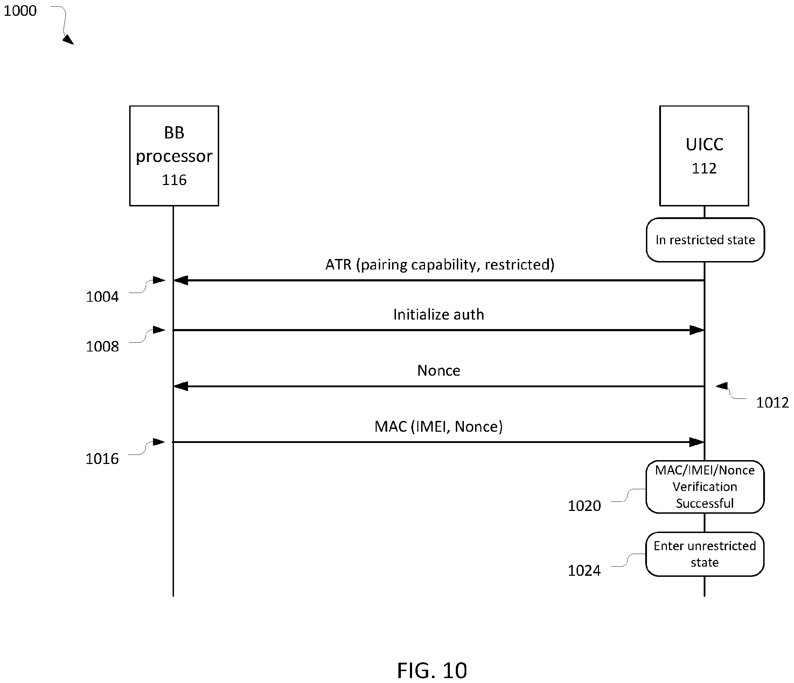

FIG. 10 illustrates an authentication flow 1000 in accordance with some embodiments. The authentication flow 1000 may occur after the UICC 112 has successfully paired with the BB processor 116 using the pairing flow 800, for example. The authentication flow 1000 is an example of a successful authentication.

At 1004, the UICC 112 may send an ATR to the BB processor 116. The ATR may include an indication of a pairing capability of the UICC 112 and an indication that the UICC 112 is operating in a restricted (or paired) state. The restricted indicator may be included in an IE of the ATR.

At 1008, the BB processor 116 may send an initialize authorization message to the UICC 112.

At 1012, the UICC 112 may transmit a nonce to the BB processor 116.

At 1016, the BB processor 116 may transmit a message authentication code (MAC) message to the UICC 112. The MAC message may be based on the nonce and one or more IMEIs of the BB processor 116. The MAC message may be based on a cipher-based MAC (CMAC), a hash-based MAC (HMAC), or another MAC algorithm.

The UICC 112 may perform a number of verifications. For example, the UICC 112 may perform a MAC verification, an IMEI verification to determine the IMEI(s) received at 1016 matches the IMEI(s) received from the initial pairing, and a nonce verification to determine the nonce received at 1016 matches the nonce provided at 1012.

At 1020, the UICC may determine the verifications are successful and the authentication flow 1000 may advance to the UICC 112 entering an unrestricted state at 1024. In the unrestricted state, the UICC 112 may perform all the available UICC operations as requested by the BB processor 116. In some embodiments, the UICC 112 may transmit a message to the BB processor 116 to indicate whether the verification at 1020 is successful or not.

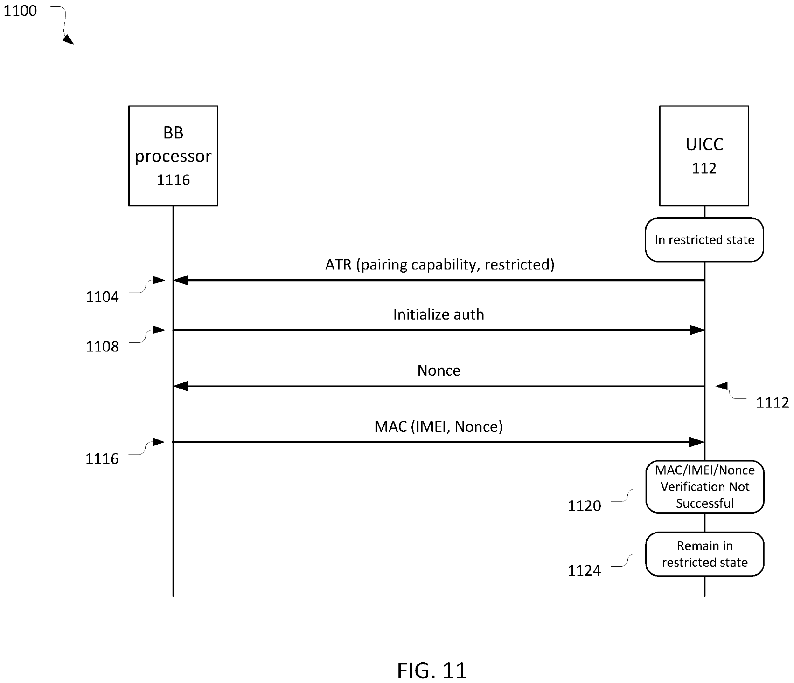

FIG. 11 illustrates an authentication flow 1100 in accordance with some embodiments. The authentication flow 1100 is an example of an authentication failure as a result of BB processor 1116 attempting to authenticate with the UICC 112 after the UICC 112 has successfully paired with the BB processor 116 using the pairing flow 800, for example.

At 1104, the UICC 112 may send an ATR message to the BB processor 1116. The ATR message may include an indication of a pairing capability of the UICC 112 and an indication that the UICC 112 is operating in a restricted (or paired) state. The restricted indicator may be included in an IE of the ATR message.

At 1108, the BB processor 1116 may send an initialize authorization message to the UICC 112.

At 1112, the UICC 112 may transmit a nonce to the BB processor 1116.

At 1116, the BB processor 116 may transmit a MAC message to the UICC 112. The MAC message may be based on the nonce and an IMEI of the BB processor 1116.

The UICC 112 may perform a number of verifications. For example, the UICC 112 may perform a MAC verification, an IMEI verification to determine the IMEI received at 1116 matches the IMEI received from the initial pairing, and a nonce verification to determine the nonce received at 1116 matches the nonce provided at 1012.

At 1120, the UICC 112 may determine at least one of the verifications is not successful. The verification failure in this instance may the IMEI verification (given the IMEI of the BB processor 1116 does not match the IMEI of the BB processor 116); however, in other instances the failed verification may relate to the MAC verification or the nonce verification. Upon determining at least one verification has failed, the authentication flow 1100 may advance to the UICC 112 remaining in the restricted state at 1124. In the restricted state, the UICC 112 may only perform a subset of the available UICC operations as requested by the BB processor 116.

In some embodiments, the pairing of the UICC 112 and BB processor 116 may occur on a warm-reset trigger or a cold-reset trigger.

In some embodiments, when the BB processor 116 does not have access to the proper key, the UICC 112 may operate in an unpaired or restricted state in which it only responds to a subset of commands that are otherwise available when the UICC 112 is operating in a normal or unrestricted state. The subset of commands may correspond to critical operations like booting communication with the BB processor 116 or allowing administrative operations. For example, the subset of commands may relate to operations to perform an initialization procedure with the BB processor 116, operations to enable installation of UICC firmware, or operations to debug or identify the 112 UICC. In some embodiments, the UICC 112 may respond to one or more of these commands even while in a restricted state.

Commands other than the subset of allowed commands may be blocked in the restricted state.

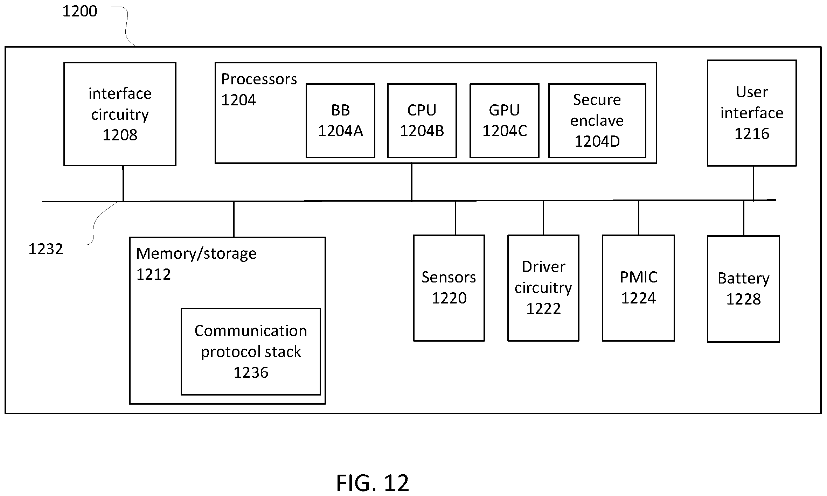

FIG. 12 illustrates a device 1200 in accordance with some embodiments. The device 1200 may be similar to and substantially interchangeable with UE 104.

The device 1200 may be any mobile or non-mobile computing device, such as, for example, mobile phones, computers, servers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, or actuators), video surveillance/monitoring devices (for example, cameras or video cameras), wearable devices (for example, a smart watch), or Internet-of-things devices.

The device 1200 may include processors 1204, interface circuitry 1208, memory/storage 1212, user interface 1216, sensors 1220, driver circuitry 1222, power management integrated circuit (PMIC) 1224, battery 1228, and a secure enclave 1240. The components of the device 1200 may be implemented as integrated circuits (ICs), portions thereof, discrete electronic devices, or other modules, logic, hardware, software, firmware, or a combination thereof. The block diagram of FIG. 12 is intended to show a high-level view of some of the components of the device 1200. However, some of the components shown may be omitted, additional components may be present, and different arrangement of the components shown may occur in other implementations.

The components of the device 1200 may be coupled with various other components over one or more interconnects 1232, which may represent any type of interface, input/output, bus (local, system, or expansion), transmission line, trace, or optical connection that allows various circuit components (on common or different chips or chipsets) to interact with one another.

The processors 1204 may include processor circuitry such as, for example, BB processor circuitry (BB) 1204A, central processor unit circuitry (CPU) 1204B, graphics processor unit circuitry (GPU) 1204C, and a secure enclave 1204D. The processors 1204 may include any type of circuitry or processor circuitry that executes or otherwise operates computer-executable instructions, such as program code, software modules, or functional processes from memory/storage 1212 to cause the device 1200 to perform operations as described herein (such as those described with respect to authentication, pairing, or operation flows described herein).

In some embodiments, the baseband processor circuitry 1204A, which may correspond to BB processor 116, may access a communication protocol stack 1236 in the memory/storage 1212 to communicate over a 3GPP compatible network. In general, the baseband processor circuitry 1204A may access the communication protocol stack 1236 to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a NAS layer. In some embodiments, the PHY layer operations may additionally/alternatively be performed by the components of the interface circuitry 1208.

The baseband processor circuitry 1204A may generate or process baseband signals or waveforms that carry information in 3GPP-compatible networks. In some embodiments, the waveforms for NR may be based cyclic prefix OFDM (CP-OFDM) in the uplink or downlink, and discrete Fourier transform spread OFDM (DFT-S-OFDM) in the uplink.

The secure enclave 1204D may include components of a secure subsystem that is isolated from a main processor (for example, the CPU 1204B) to keep user data secure even in the event the main processor becomes compromised. The secure enclave 1204D may include, for example, a SEP, a memory protection engine, a true random number generator (TRNG), a secure enclave AES engine, a public key accelerator, and an inter-integrated circuit bus.

The memory/storage 1212 may include one or more non-transitory, computer-readable media that includes instructions (for example, communication protocol stack 1236) that may be executed by one or more of the processors 1204 to cause the device 1200 to perform various operations described herein. The memory/storage 1212 include any type of volatile or non-volatile memory that may be distributed throughout the device 1200. In some embodiments, some of the memory/storage 1212 may be located on the processors 1204 themselves (for example, L1 and L2 cache), while other memory/storage 1212 is external to the processors 1204 but accessible thereto via a memory interface. The memory/storage 1212 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The interface circuitry 1208 may a radio-frequency (RF) interface having transceiver circuitry and radio frequency front module (RFEM) that allows the device 1200 to communicate with other devices over a radio access network. The RF interface may include various elements arranged in transmit or receive paths. These elements may include, for example, switches, mixers, amplifiers, filters, synthesizer circuitry, and control circuitry. The interface circuitry 1208 may additionally/alternatively include other network interface to communicate via other wired or wireless networks, for example, an Ethernet interface.

The user interface 1216 includes various input/output (I/O) devices designed to enable user interaction with the device 1200. The user interface 1216 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, and projectors), with the output of characters, graphics, multimedia objects, and the like being generated or produced from the operation of the device 1200.

The sensors 1220 may include devices, modules, or subsystems whose purpose is to detect events or changes in its environment and send the information (sensor data) about the detected events to some other device, module, or subsystem. Examples of such sensors include inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; and microphones or other like audio capture devices.

The driver circuitry 1222 may include software and hardware elements that operate to control particular devices that are embedded in the device 1200, attached to the device 1200, or otherwise communicatively coupled with the device 1200. The driver circuitry 1222 may include individual drivers allowing other components to interact with or control various input/output (I/O) devices that may be present within, or connected to, the device 1200. For example, driver circuitry 1222 may include a display driver to control and allow access to a display device, a touchscreen driver to control and allow access to a touchscreen interface, sensor drivers to obtain sensor readings of sensors 1220 and control and allow access to sensors 1220, drivers to obtain actuator positions of electro-mechanic components or control and allow access to the electro-mechanic components, a camera driver to control and allow access to an embedded image capture device, audio drivers to control and allow access to one or more audio devices.

The PMIC 1224 may manage power provided to various components of the device 1200. In particular, with respect to the processors 1204, the PMIC 1224 may control power-source selection, voltage scaling, battery charging, or DC-to-DC conversion.

In some embodiments, the PMIC 1224 may control, or otherwise be part of, various power saving mechanisms of the device 1200 including DRX as discussed herein.

A battery 1228 may power the device 1200, although in some examples the device 1200 may be mounted deployed in a fixed location and may have a power supply coupled to an electrical grid. The battery 1228 may be a lithium ion battery, a metal-air battery, such as a zinc-air battery, an aluminum-air battery, a lithium-air battery, and the like. In some implementations, such as in vehicle-based applications, the battery 1228 may be a typical lead-acid automotive battery.

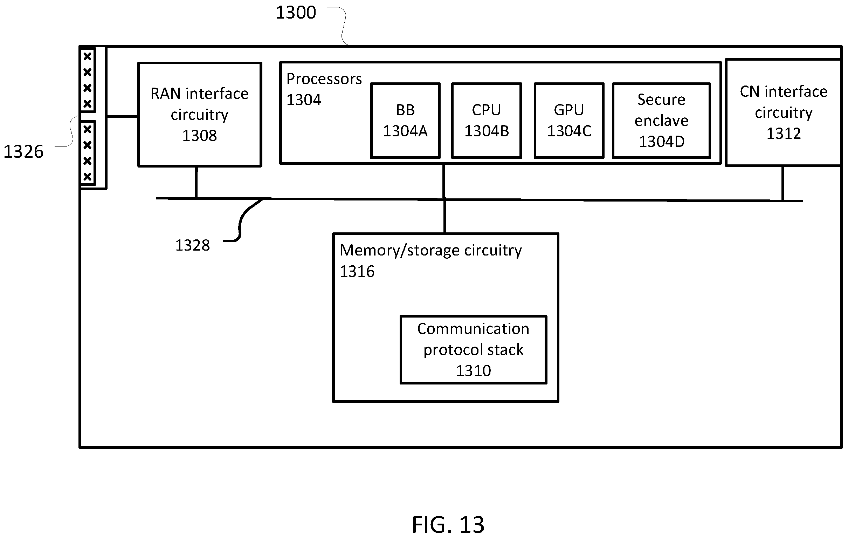

FIG. 13 illustrates an example device 1300 in accordance with some embodiments. The device 1300 may be similar to, and substantially interchangeable with, base station 108, DS server 604, certificate server 608, or server 704.

The device 1300 may include processors 1304, RF interface circuitry 1308, core network (CN) interface circuitry 1312, memory/storage circuitry 1316, and antenna structure 1326.

The components of the device 1300 may be coupled with various other components over one or more interconnects 1328.

The processors 1304, RF interface circuitry 1308, memory/storage circuitry 1316 (including communication protocol stack 1310), antenna structure 1326, and interconnects 1328 may be similar to like-named elements shown and described with respect to FIG. 12.

The CN interface circuitry 1312 may provide connectivity to a core network, for example, a 5^{th} Generation Core network (5GC) using a 5GC-compatible network interface protocol such as carrier Ethernet protocols, or some other suitable protocol. Network connectivity may be provided to/from the device 1300 via a fiber optic or wireless backhaul. The CN interface circuitry 1312 may include one or more dedicated processors or FPGAs to communicate using one or more of the aforementioned protocols. In some implementations, the CN interface circuitry 1312 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, or network element as described above in connection with one or more of the preceding figures may be configured to operate in accordance with one or more of the examples set forth below in the example section.

### Examples

In the following sections, further exemplary embodiments are provided.

Example 1 includes a method comprising: generating a begin-pair message to be transmitted to a server, the begin-pair message to pair a universal integrated circuit card (UICC) and a baseband processor of a device; processing an authentication request received from the server; generating, based on the authentication request, a generate-attestation message to be transmitted to a secure-enclave processor (SEP) on the device; and receiving, from the SEP, a SEP attestation signed by a SEP-specific key pair, the SEP attestation conveying a SEP certificate.

Example 2 includes the method of example 1 or some other example herein, wherein the UICC is an embedded UICC (eUICC) and the begin-pair message includes: an exclusive chip identifier (ECID) associated with the device, an eUICC identifier (EID) associated with the eUICC, or a Global System for Mobile Communications Association (GSMA) subject key identifier.

Example 3 includes the method of example 1 or 2 or some other example herein, wherein the UICC is an embedded UICC (eUICC), the authentication request includes one or more hardware security module (HSM) challenges, and the generate-attestation message includes the one or more HSM challenges.

Example 4 includes a method of example 3 or some other example herein, wherein the one or more HSM challenges comprises: an HSM challenge for the SEP; or an HSM challenge for the eUICC.

Example 5 includes a method of example 3 or some other example herein, wherein the one or more HSM challenges includes an HSM challenge for the eUICC and the method further comprises: generating a local profile assistant (LPA) signing request to be transmitted to the eUICC with the HSM challenge for the eUICC.

Example 6 includes a method of example 5 or some other example herein, further comprising: receiving, an LPA signing response from the eUICC, the LPA signing response to include a payload with the HSM challenge for the UICC signed with a UICC signature and a certificate chain to be used to verify the UICC signature; and generating an authentication response to be transmitted to the server based on the LPA signing response.

Example 7 includes a method of example 6 or some other example herein, wherein the authentication response comprises the SEP attestation, the certificate, an eUICC signature, or an eUICC certificate.

Example 8 includes the method of example 6 or some other example herein, further comprising: receiving, from the server, a first store pairing key message that includes a server attestation; and generating a second store-pairing key message to be transmitted to the eUICC with the server attestation and a signed certificate from the server, wherein the server attestation includes a UICC identifier (ID) associated with the UICC and a public key of the SEP certificate.

Example 9 includes the method of example 8 or some other example herein, further comprising: receiving, from the UICC, a response to indicate the UICC verified the SEP attestation, the signed certificate, and the EID and has stored the public key.

Example 10 includes a method to be implemented by a universal integrated circuit card (UICC), the method comprising: transmitting, to a baseband processor, an answer-to-reset (ATR) message that includes a pairing capability of the UICC and an unpaired indication; receiving, from the baseband processor, an initialize-pairing message with an international mobile equipment identifier (IMEI) associated with the baseband processor; generating a random key; and transmitting the random key to the baseband processor.

Example 11 includes the method of example 10 or some other example herein, further comprising: receiving, from the baseband processor, a finalize-pairing message to indicate the random key was saved by baseband processor.

Example 12 includes a method of example 11 or some other example herein, further comprising entering a paired state based on said receiving of the finalize-pairing message.

Example 13 includes the method of example 12 or some other example herein, wherein the ATR message is a first ATR message and the method further comprises: detecting a power-on or reset event; determining, based on said detecting the power-on or reset event, that the UICC is in the paired state; and transmitting, to a processor, a second ATR message with a restricted indication to indicate operation of the UICC is restricted to a subset of available operations.

Example 14 includes a method of example 13 or some other example herein, further comprising: receiving, from the processor, an initialize-authentication message; transmitting, to the processor, a nonce; receiving, from the processor, a message authentication code (MAC) message that is based on the nonce and an IMEI associated with the processor; and performing one or more verification operations based on the MAC message; and determining the processor is the baseband processor based on said performing the one or more verification operations.

Example 15 includes the method of example 14 or some other example herein, wherein the MAC message is based on a cipher-based MAC algorithm or a hash-based MAC algorithm.

Example 16 includes a method of example 14 or some other example herein, wherein the one or more verification operations comprise: a verification of the MAC message, a verification of the IMEI, or a verification of the nonce.

Example 17 includes the method of example 14 or some other example herein, further comprising: transmitting, to the baseband processor based on said determining the processor is the baseband processor, a message to indicate the UICC is no longer restricted to the subset of available operations.

Example 18 includes the method of example 13 or some other example herein, wherein the subset of available operations includes operations to perform an initialization procedure with the baseband processor.

Example 19 includes the method of example 13 or some other example herein, wherein the subset of available operations includes operations to enable installation of UICC firmware.

Example 20 includes the method of example 13 or some other example herein, wherein the subset of available operations includes operations to debug or identify the UICC.

Another example may include an apparatus comprising means to perform one or more elements of a method described in or related to any of examples 1-20, or any other method or process described herein.

Another example may include one or more non-transitory computer-readable media comprising instructions to cause an electronic device, upon execution of the instructions by one or more processors of the electronic device, to perform one or more elements of a method described in or related to any of examples 1-20, or any other method or process described herein.

Another example may include an apparatus comprising logic, modules, or circuitry to perform one or more elements of a method described in or related to any of examples 1-20, or any other method or process described herein.

Another example may include a method, technique, or process as described in or related to any of examples 1-20, or portions or parts thereof.

Another example may include an apparatus comprising: one or more processors and one or more computer-readable media comprising instructions that, when executed by the one or more processors, cause the one or more processors to perform the method, techniques, or process as described in or related to any of examples 1-20, or portions thereof.

Another example may include a signal as described in or related to any of examples 1-20, or portions or parts thereof.

Another example may include a datagram, information element, packet, frame, segment, PDU, or message as described in or related to any of examples 1-20, or portions or parts thereof, or otherwise described in the present disclosure.

Another example may include a signal encoded with data as described in or related to any of examples 1-20, or portions or parts thereof, or otherwise described in the present disclosure.

Another example may include a signal encoded with a datagram, IE, packet, frame, segment, PDU, or message as described in or related to any of examples 1-20, or portions or parts thereof, or otherwise described in the present disclosure. Another example may include an electromagnetic signal carrying computer-readable instructions, wherein execution of the computer-readable instructions by one or more processors is to cause the one or more processors to perform the method, techniques, or process as described in or related to any of examples 1-20, or portions thereof.

Another example may include a computer program comprising instructions, wherein execution of the program by a processing element is to cause the processing element to carry out the method, techniques, or process as described in or related to any of examples 1-20, or portions thereof.

Another example may include a signal in a wireless network as shown and described herein.

Another example may include a method of communicating in a wireless network as shown and described herein.

Another example may include a system for providing wireless communication as shown and described herein.

Another example may include a device for providing wireless communication as shown and described herein.

Any of the above-described examples may be combined with any other example (or combination of examples), unless explicitly stated otherwise. The foregoing description of one or more implementations provides illustration and description but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

Exemplary methods and universal integrated circuit cards (UICCs) are set out in the following items.

### First item list:

1. A method comprising:
   generating a begin-pair message to be transmitted to a server, the begin-pair message to pair a universal integrated circuit card (UICC) and a baseband processor of a device;
   processing an authentication request received from the server;
   generating, based on the authentication request, a generate-attestation message to be transmitted to a secure-enclave processor (SEP) on the device; and
   receiving, from the SEP, a SEP attestation signed by a SEP-specific key pair, the SEP attestation conveying a SEP certificate.
2. The method of item 1, wherein the UICC is an embedded UICC (eUICC) and the begin-pair message includes:
   an exclusive chip identifier (ECID) associated with the device, an eUICC identifier (EID) associated with the eUICC, or a Global System for Mobile Communications Association (GSMA) subject key identifier.
3. The method of item 1, wherein the UICC is an embedded UICC (eUICC), the authentication request includes one or more hardware security module (HSM) challenges, and the generate-attestation message includes the one or more HSM challenges.
4. The method of item 3, wherein the one or more HSM challenges comprises:
   an HSM challenge for the SEP; or
   an HSM challenge for the eUICC.
5. The method of item 3, wherein the one or more HSM challenges includes an HSM challenge for the eUICC and the method further comprises:
   generating a local profile assistant (LPA) signing request to be transmitted to the eUICC with the HSM challenge for the eUICC;
   receiving, an LPA signing response from the eUICC, the LPA signing response to include a payload with the HSM challenge for the UICC signed with a UICC signature and a certificate chain to be used to verify the UICC signature; and
   generating an authentication response to be transmitted to the server based on the LPA signing response.
6. The method of item 5, wherein the authentication response comprises the SEP attestation, the certificate, an eUICC signature, or an eUICC certificate.
7. The method of item 5, further comprising:
   receiving, from the server, a first store pairing key message that includes a server attestation, wherein the server attestation includes an eUICC identifier (EID) associated with the eUICC and a public key of the SEP certificate;
   generating a second store-pairing key message to be transmitted to the eUICC with the server attestation and a signed certificate from the server; and
   receiving, from the UICC, a response to indicate the UICC verified the SEP attestation, the signed certificate, and the EID and has stored the public key.
8. A universal integrated circuit card (UICC) comprising:
   interface circuitry; and
   processing circuitry coupled with the interface circuitry, the processing circuitry to:
      transmit, to a baseband processor via the interface circuitry, an answer-to-reset (ATR) message that includes a pairing capability of the UICC and an unpaired indication;
      receive, from the baseband processor via the interface circuitry, an initialize-pairing message with an international mobile equipment identifier (IMEI) associated with the baseband processor;
      generate a random key; and
      transmit the random key to the baseband processor via the interface circuitry.
9. The UICC of item 8, wherein the processing circuitry is further to:
   receive, from the baseband processor via the interface circuitry, a finalize-pairing message to indicate the random key was saved by baseband processor.
10. The UICC of item 9, wherein the processing circuitry is further to:
   enter a paired state based on receipt of the finalize-pairing message.
11. The UICC of item 10, wherein the ATR message is a first ATR message and the processing circuitry is further to:
   detect a power-on or reset event; and
   determine, based on detection of the power-on or reset event, that the UICC is in the paired state; and
   transmit, to a processor, a second ATR message with a restricted indication to indicate operation of the UICC is restricted to a subset of available operations.
12. The UICC of item 11, wherein the processing circuitry is further to:
   receive, from the processor via the interface circuitry, an initialize-authentication message;
   transmit, to the processor via the interface circuitry, a nonce;
   receive, from the processor via the interface circuitry, a message authentication code (MAC) message that is based on the nonce and an IMEI associated with the processor;
   perform one or more verification operations based on the MAC message; and
   determine the processor is the baseband processor based on performance of the one or more verification operations.
13. The UICC of item 12, wherein the MAC message is based on a cipher-based MAC algorithm or a hash-based MAC algorithm and the one or more verification operations comprise: a verification of the MAC message, a verification of the IMEI, or a verification of the nonce.
14. The UICC of item 12, wherein the processing circuitry is further to:
   transmit, to the baseband processor based on determination that the processor is the baseband processor, a message to indicate the UICC is no longer restricted to the subset of available operations.
15. The UICC of item 11, wherein the subset of available operations includes operations to: perform an initialization procedure with the baseband processor; enable installation of UICC firmware; or debug or identify the UICC.

### Second item list:

1. A method comprising:
   transmitting, to a server, a begin-pair message to pair a universal integrated circuit card (UICC) and a baseband processor of a device;
   receiving, from the server, an authentication request;
   transmitting, based on the authentication request, a generate-attestation message to a secure-encryption platform (SEP) on the device; and
   receiving, from the SEP, an authentication key and certificate.
2. The method of item 1, wherein the UICC is an embedded UICC (eUICC) and the begin-pair message includes:
   an exclusive chip identifier (ECID) associated with the device, an eUICC identifier (EID) associated with the eUICC, or a GSM_SKI.
3. The method of item 1 or 2, wherein the UICC is an embedded UICC (eUICC), the authentication request includes one or more hardware security module (HSM) challenges, and the generate-attestation message includes the one or more HSM challenges.
4. The method of item 3, wherein the one or more HSM challenges comprises:
   an HSM challenge for the SEP; or
   an HSM challenge for the eUICC.
5. The method of item 3, wherein the one or more HSM challenges includes an HSM challenge for the eUICC and the method further comprises:
   transmitting a local profile assistant (LPA) signing request to the eUICC with the HSM challenge for the eUICC.
6. The method of item 5, further comprising:
   receiving, an LPA signing response from the eUICC;
   transmitting an authentication response to the server based on the LPA signing response.
7. The method of item 6, wherein the authentication response comprises the authentication key, the certificate, an eUICC signature, or an eUICC certificate.
8. The method of item 6, further comprising:
   receiving, from the server, a first store pairing key message that includes a SEP attestation; and
   transmitting, to the eUICC, a second store-pairing key message with the SEP attestation and a signed certificate from the server, wherein the SEP attestation includes an eUICC identifier (EID) associated with the eUICC.
9. The method of item 8, further comprising:
   receiving, from the eUICC, a response to indicate the eUICC verified the SEP attestation, the signed certificate, and the EID and stored a public key of the SEP.
10. A method to be implemented by a universal integrated circuit card (UICC), the method comprising:
   transmitting, to a baseband processor, an answer-to-reset (ATR) message that includes a pairing capability of the UICC and an unpaired indication;
   receiving, from the baseband processor, an initialize-pairing message with an international mobile equipment identifier (IMEI) associated with the baseband processor;
   generating a key based on the IMEI; and
   transmitting the key to the baseband processor.
11. The method of item 10, further comprising:
   receiving, from the baseband processor, a finalize-pairing message to indicate the key was saved by baseband processor.
12. The method of item 11, further comprising
   entering a paired state based on said receiving of the finalize-pairing message.
13. The method of item 10, wherein the ATR message is a first ATR message and the method further comprises:
   detecting a power-on or reset event; and
   determining, based on said detecting the power-on or reset event, that the UICC is in the paired state; and
   transmitting, to a processor, a second ATR with a restricted indication to indicate operation of the UICC is restricted to a subset of available operations.
14. The method of item 13, further comprising:
   receiving, from the processor, an initialize-authentication message;
   transmitting, to the processor, a nonce;
   receiving, from the processor, a cipher-based message authentication code (CMAC) message that is based on the nonce and an IMEI associated with the processor; and
   performing one or more verification operations based on the CMAC message; and
   determining the processor is the baseband processor based on said performing the one or more verification operations.
15. The method of item 14, wherein the one or more verification operations comprise: a verification of the CMAC, a verification of the IMEI, or a verification of the nonce
16. The method of item 14, further comprising:
   transmitting, to the baseband processor based on said determining the processor is the processor is the baseband processor, a third ATR message to indicate the UICC is no longer restricted to the subset of available operations.
17. The method of item 13, wherein the subset of available operations includes responding to a firmware or operating system update command, a select application identifier (AID) command, a terminal capability command, a get CPSN command, a get embedded universal integrated circuit card identifier (EID) command, a get profiles information command, or a non-secured authentication and key agreement (AKA) embedded subscriber identity module (eSIM) manager command.

### Third item list:

1. A method comprising:
   generating a begin-pair message to be transmitted to a server, the begin-pair message to pair a universal integrated circuit card (UICC) and a baseband processor of a device;
   processing an authentication request received from the server;
   generating, based on the authentication request, a generate-attestation message to be transmitted to a secure-enclave processor (SEP) on the device; and
   receiving, from the SEP, a SEP attestation signed by a SEP-specific key pair, the SEP attestation conveying a SEP certificate.
2. The method of item 1, wherein the UICC is an embedded UICC (eUICC) and the begin-pair message includes:
   an exclusive chip identifier (ECID) associated with the device, an eUICC identifier (EID) associated with the eUICC, or a Global System for Mobile Communications Association (GSMA) subject key identifier.
3. The method of item 1, wherein the UICC is an embedded UICC (eUICC), the authentication request includes one or more hardware security module (HSM) challenges, and the generate-attestation message includes the one or more HSM challenges.
4. The method of item 3, wherein the one or more HSM challenges comprises:
   an HSM challenge for the SEP; or
   an HSM challenge for the eUICC.
5. The method of item 3, wherein the one or more HSM challenges includes an HSM challenge for the eUICC and the method further comprises:
   generating a local profile assistant (LPA) signing request to be transmitted to the eUICC with the HSM challenge for the eUICC.
6. The method of item 5, further comprising:
   receiving, an LPA signing response from the eUICC, the LPA signing response to include a payload with the HSM challenge for the UICC signed with a UICC signature and a certificate chain to be used to verify the UICC signature; and
   generating an authentication response to be transmitted to the server based on the LPA signing response.
7. The method of item 6, wherein the authentication response comprises the SEP attestation, the certificate, an eUICC signature, or an eUICC certificate.
8. The method of item 6, further comprising:
   receiving, from the server, a first store pairing key message that includes a server attestation; and
   generating a second store-pairing key message to be transmitted to the eUICC with the server attestation and a signed certificate from the server,
   wherein the server attestation includes a UICC identifier (ID) associated with the UICC and a public key of the SEP certificate.
9. The method of item 8, further comprising:
   receiving, from the UICC, a response to indicate the UICC verified the SEP attestation, the signed certificate, and the EID and has stored the public key.
10. A universal integrated circuit card (UICC) comprising:
   interface circuitry; and
   processing circuitry coupled with the interface circuitry, the processing circuitry to:
      transmit, to a baseband processor via the interface circuitry, an answer-to-reset (ATR) message that includes a pairing capability of the UICC and an unpaired indication;
      receive, from the baseband processor via the interface circuitry, an initialize-pairing message with an international mobile equipment identifier (IMEI) associated with the baseband processor;
      generate a random key; and
      transmit the random key to the baseband processor via the interface circuitry.
11. The UICC of item 10, wherein the processing circuitry is further to:
   receive, from the baseband processor via the interface circuitry, a finalize-pairing message to indicate the random key was saved by baseband processor.
12. The UICC of item 11, wherein the processing circuitry is further to:
   enter a paired state based on receipt of the finalize-pairing message.
13. The UICC of item 12, wherein the ATR message is a first ATR message and the processing circuitry is further to:
   detect a power-on or reset event; and
   determine, based on detection of the power-on or reset event, that the UICC is in the paired state; and
   transmit, to a processor, a second ATR message with a restricted indication to indicate operation of the UICC is restricted to a subset of available operations.
14. The UICC of item 13, wherein the processing circuitry is further to:
   receive, from the processor via the interface circuitry, an initialize-authentication message; transmit, to the processor via the interface circuitry, a nonce;
   receive, from the processor via the interface circuitry, a message authentication code (MAC) message that is based on the nonce and an IMEI associated with the processor;
   perform one or more verification operations based on the MAC message; and
   determine the processor is the baseband processor based on performance of the one or more verification operations.
15. The UICC of item 14, wherein the MAC message is based on a cipher-based MAC algorithm or a hash-based MAC algorithm.
16. The UICC of item 14, wherein the one or more verification operations comprise: a verification of the MAC message, a verification of the IMEI, or a verification of the nonce.
17. The UICC of item 14, wherein the processing circuitry is further to:
   transmit, to the baseband processor based on determination that the processor is the baseband processor, a message to indicate the UICC is no longer restricted to the subset of available operations.
18. The UICC of item 13, wherein the subset of available operations includes operations to perform an initialization procedure with the baseband processor.
19. The UICC of item 13, wherein the subset of available operations includes operations to enable installation of UICC firmware.
20. The UICC of item 13, wherein the subset of available operations includes operations to debug or identify the UICC.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method comprising:
generating a begin-pair message to be transmitted to a server, the begin-pair message to pair a universal integrated circuit card (UICC) and a baseband processor of a device;
processing an authentication request received from the server;
generating, based on the authentication request, a generate-attestation message to be transmitted to a secure-enclave processor (SEP) on the device; and
receiving, from the SEP, a SEP attestation signed by a SEP-specific key pair, the SEP attestation conveying a SEP certificate.

2. The method of claim 1, wherein the UICC is an embedded UICC (eUICC) and the begin-pair message includes:
an exclusive chip identifier (ECID) associated with the device, an eUICC identifier (EID) associated with the eUICC, or a Global System for Mobile Communications Association (GSMA) subject key identifier.

3. The method of claim 1, wherein the UICC is an embedded UICC (eUICC), the authentication request includes one or more hardware security module (HSM) challenges, and the generate-attestation message includes the one or more HSM challenges.

4. The method of claim 3, wherein the one or more HSM challenges comprises:
an HSM challenge for the SEP; or
an HSM challenge for the eUICC.

5. The method of claim 3, wherein the one or more HSM challenges includes an HSM challenge for the eUICC and the method further comprises:
generating a local profile assistant (LPA) signing request to be transmitted to the eUICC with the HSM challenge for the eUICC;
receiving, an LPA signing response from the eUICC, the LPA signing response to include a payload with the HSM challenge for the UICC signed with a UICC signature and a certificate chain to be used to verify the UICC signature; and
generating an authentication response to be transmitted to the server based on the LPA signing response.

6. The method of claim 5, wherein the authentication response comprises the SEP attestation, the certificate, an eUICC signature, or an eUICC certificate.

7. The method of claim 5, further comprising:
receiving, from the server, a first store pairing key message that includes a server attestation, wherein the server attestation includes an eUICC identifier (EID) associated with the eUICC and a public key of the SEP certificate;
generating a second store-pairing key message to be transmitted to the eUICC with the server attestation and a signed certificate from the server; and
receiving, from the UICC, a response to indicate the UICC verified the SEP attestation, the signed certificate, and the EID and has stored the public key.

8. A universal integrated circuit card (UICC) comprising:
interface circuitry; and
processing circuitry coupled with the interface circuitry, the processing circuitry to:
transmit, to a baseband processor via the interface circuitry, an answer-to-reset (ATR) message that includes a pairing capability of the UICC and an unpaired indication;
receive, from the baseband processor via the interface circuitry, an initialize-pairing message with an international mobile equipment identifier (IMEI) associated with the baseband processor;
generate a random key; and
transmit the random key to the baseband processor via the interface circuitry.

9. The UICC of claim 8, wherein the processing circuitry is further to:
receive, from the baseband processor via the interface circuitry, a finalize-pairing message to indicate the random key was saved by baseband processor.

10. The UICC of claim 9, wherein the processing circuitry is further to:
enter a paired state based on receipt of the finalize-pairing message.

11. The UICC of claim 10, wherein the ATR message is a first ATR message and the processing circuitry is further to:
detect a power-on or reset event; and
determine, based on detection of the power-on or reset event, that the UICC is in the paired state; and
transmit, to a processor, a second ATR message with a restricted indication to indicate operation of the UICC is restricted to a subset of available operations.

12. The UICC of claim 11, wherein the processing circuitry is further to:
receive, from the processor via the interface circuitry, an initialize-authentication message;
transmit, to the processor via the interface circuitry, a nonce;
receive, from the processor via the interface circuitry, a message authentication code (MAC) message that is based on the nonce and an IMEI associated with the processor;
perform one or more verification operations based on the MAC message; and
determine the processor is the baseband processor based on performance of the one or more verification operations.

13. The UICC of claim 12, wherein the MAC message is based on a cipher-based MAC algorithm or a hash-based MAC algorithm and the one or more verification operations comprise: a verification of the MAC message, a verification of the IMEI, or a verification of the nonce.

14. The UICC of claim 12, wherein the processing circuitry is further to:
transmit, to the baseband processor based on determination that the processor is the baseband processor, a message to indicate the UICC is no longer restricted to the subset of available operations.

15. The UICC of claim 11, wherein the subset of available operations includes operations to: perform an initialization procedure with the baseband processor; enable installation of UICC firmware; or debug or identify the UICC.
